# EUROPÄISCHE PATENTANMELDUNG

(11) **EP 2 302 226 A1**
(43) Veröffentlichungstag der Anmeldung: **30.03.2011**
(21) Anmeldenummer: 10401152.3
(22) Anmeldetag: 01.09.2010
(51) Int. Cl.: F16B 13/00, F16B 13/12

(54) **Doppel-Dübel und Verfahren für eine Abstandsmontage**

(30) Priorität: 29.09.2009 DE 102009043650
(71) Anmelder: fischerwerke GmbH & Co. KG, 72178 Waldachtal (DE)
(72) Erfinder: Seibold, Günter, 72178 Waldachtal-Salzstetten (DE)

(57) **Zusammenfassung**

Die Erfindung betrifft einen Doppel-Dübel (1) für eine Abstandsmontage einer Fassadenplatte (14) vor einer tragenden Wand (15). Die Erfindung schlägt vor, zwei Spreizdübel (2, 3) axial hintereinander angeordnet und über eine Solltrennstelle (4) einstückig miteinander auszubilden. Zur Abstandsmontage wird der Doppel-Dübel (1) in ein Durchgangsloch (16) in der Fassadenplatte (14) gesteckt, durch Einbringen eines stiftförmigen Spreizelements (9) werden die beiden Spreizdübel (2, 3) an der Solltrennstelle (4) voneinander getrennt und der vordere Spreizdübel (2) wird mit dem Spreizelement (9) in ein Sackloch (17) in der tragenden Wand (15) eingebracht. Durch Einschrauben des Spreizelements (9) in den vorderen Spreizdübel (2) werden beide Spreizdübel (2, 3) aufgespreizt und die Fassadenplatte (14) in ihrem Abstand von der tragenden Wand (15) fixiert.

## Beschreibung

Die Erfindung betrifft einen Doppel-Dübel für eine Abstandsmontage mit den Merkmalen des Oberbegriffs des Anspruchs 1 sowie ein Verfahren für eine Abstandsmontage mit den Merkmalen des Anspruchs 8.

Der Doppel-Dübel ist zur Befestigung einer Fassade mit oder auch ohne Abstand vor/an einer tragenden Wand eines zweischaligen Mauerwerks vorgesehen. Die Fassade kann beispielsweise eine Klinkerfassade sein oder Platten aus Stein, Steingut oder Beton aufweisen. Die Aufzählung ist beispielhaft und nicht abschließend. Der Doppel-Dübel ist insbesondere zur Sanierung vorgesehen, kann aber auch bei einer Neuerstellung eingesetzt werden. Die Erfindung ist nicht auf den angegebenen Verwendungszweck beschränkt. Unter "Spreizdübel" soll ein Element verstanden werden, das durch Einbringen eines stiftförmigen Spreizelements, beispielsweise durch Eindrehen einer Schraube oder Einschlagen eines Nagels, aufspreizbar und dadurch in einer Fassade, einer tragenden Wand oder einem anderen Ankergrund verankerbar, d.h. befestigbar ist.

Die europäische Patentanmeldung EP 0 928 901 A1 offenbart einen Spreizdübel mit einem rohrförmigen Hohlschaft, dessen hinterer, dem Spreizdübel ferner Bereich aufspreizbar ausgebildet ist, d.h. einen (hinteren) Spreizdübel in der hier verwendeten Terminologie bildet. Der Hohlschaft ist einstückig mit dem Spreizdübel am vorderen Ende, welcher als vorderer Spreizdübel bezeichnet werden kann. Aufspreizbar sind die beiden Spreizdübel des bekannten Doppel-Dübels mit einem stiftförmigen Spreizelement, das auch als Schraube aufgefasst werden kann. Das Spreizelement weist ein Schraubengewinde an seinem vorderen Ende auf, das dem vorderen Spreizdübel zugeordnet ist. Am hinteren Ende weist das Spreizelement eine umlaufende Profilierung oder beispielsweise einen Rändel auf.

Zu einer Abstandsmontage wird der bekannte Doppel-Dübel durch ein Durchgangsloch in einer Fassade durchgesteckt in ein Sackloch in der tragenden Wand. Der vordere Spreizdübel befindet sich im Sackloch in der tragenden Wand, der hintere Spreizdübel befindet sich in der Fassade. Das stiftförmige Spreizelement wird in den Doppel-Dübel eingebracht und durch Drehantrieb sein Schraubengewinde am vorderen Ende in den vorderen Spreizdübel eingeschraubt. Dabei zieht das Schraubengewinde die umlaufende Profilierung oder den Rändel am hinteren Ende des Spreizelements in den hinteren Spreizdübel ein, so dass durch das Einschrauben des Schraubengewindes am vorderen Ende des Spreizelements der vordere Spreizdübel des bekannten Doppel-Dübels in der tragenden Wand aufgespreizt und verankert und durch das Einziehen der umlaufenden Profilierung oder des Rändels am hinteren Ende des stiftförmigen Spreizelements in den hinteren Spreizdübel dieser in der Fassade aufgespreizt und in ihr verankert wird. Insbesondere über den Schraubenschaft hält der bekannte Doppel-Dübel die Fassade in einem vorgegebenen Abstand an/vor der tragenden Wand.

Ein Nachteil des bekannten Doppel-Dübels ist seine unveränderliche Länge, die für unterschiedlich dicke Fassaden und/oder unterschiedliche Abstände der Fassade von der tragenden Wand verschieden lange Doppel-Dübel notwendig macht.

Aufgabe der Erfindung ist, einen Doppel-Dübel vorzuschlagen, der sich an den Abstand einer Fassade von einer tragenden Wand anpasst.

Diese Aufgabe wird erfindungsgemäß durch einen Doppel-Dübel mit den Merkmalen des Anspruchs 1 sowie durch ein Verfahren mit den Merkmalen des Anspruchs 8 gelöst. Der erfindungsgemäße Doppel-Dübel mit den Merkmalen des Anspruchs 1 weist zwei hintereinander angeordnete Spreizdübel auf, die über eine Solltrennstelle miteinander verbunden sind. Die Bezeichnung als "vorderer" und als "hinterer" Spreizdübel dient insbesondere der eindeutigen Bezeichnung. Als "vorderer Spreizdübel" wird der Spreizdübel bezeichnet, der zur Verankerung in der tragenden Wand, und als "hinterer Spreizdübel" wird der Spreizdübel bezeichnet, der zur Verankerung in der Fassade vorgesehen ist. Die Solltrennstelle ist beispielsweise eine umlaufende dünnwandige Stelle oder weist beispielsweise einen oder mehrere Stege auf, die die beiden Spreizdübel miteinander verbinden und an der die beiden Spreizdübel voneinander trennbar sind, indem eine vom hinteren Spreizdübel weg gerichtete Kraft auf den vorderen Spreizdübel ausgeübt wird. Diese Kraft wird insbesondere durch Einbringen des Spreizelements durch den hinteren Spreizdübel hindurch in den vorderen Spreizdübel aufgebracht.

Zur Abstandsmontage wird der erfindungsgemäße Doppel-Dübel durch ein Durchgangsloch in der Fassade gesteckt, so dass sich der hintere Spreizdübel im Durchgangsloch in der Fassade befindet und der vordere Spreizdübel auf einer der tragenden Wand zugewandten Seite aus der Fassade vorsteht. Der vordere Spreizdübel kann sich vollständig in einem Zwischenraum zwischen der Fassade und der tragenden Wand befinden, er kann bereits ein Stück weit in ein Sackloch in der tragenden Wand ragen und/oder er kann sich noch ein Stück weit oder sogar vollständig im Durchgangsloch in der Fassade befinden. Das stiftförmige Spreizelement wird von einer der tragenden Wand abgewandten Seite der Fassade in den hinteren Spreizdübel und durch diesen hindurch in den vorderen Spreizdübel eingebracht. Dabei übt das Spreizelement eine vom hinteren Spreizdübel weg gerichtete Kraft auf den vorderen Spreizdübel aus, wenn er vorzugsweise ein nur kurzes Stück in den vorderen Spreizdübel eingetreten ist, und trennt dadurch den vorderen Spreizdübel an der Solltrennstelle vom hinteren Spreizdübel. Das Spreizelement, das den vorderen Spreizdübel nun auf seinem vorderen Ende trägt, wird weiter durch den hinteren Spreizdübel durchgeführt und bringt den vorderen Spreizdübel in das Sackloch in der tragenden Wand ein. Das Spreizelement wird nunmehr in den vorderen Spreizdübel eingebracht und spreizt diesen in der tragenden Wand und den hinteren Spreizdübel in der Fassade auf, so dass der vordere Spreizdübel in der tragenden Wand und der hintere Spreizdübel in der Fassade verankert ist. Über die beiden Spreizdübel verbindet das stiftförmige Element die Fassade mit der tragenden Wand und hält sie im vorgegebenen Abstand. Der Abstand der beiden Spreizdübel passt sich beim Setzen und Verankern der Dicke der Fassade und ihrem Abstand von der tragenden Wand an, der Doppel-Dübel eignet sich an sich für beliebige Abstände der Fassade von der tragenden Wand von "Null" (kein Abstand, die Fassade liegt an der tragenden Wand an) bis zu theoretisch beliebig großem Abstand. Die Länge des stiftförmigen Spreizelements muss eventuell an die Dicke der Fassade und ihren Abstand von der tragenden Wand angepasst sein, wobei eine Anpassung in Grenzen durch die Einbringtiefe des Spreizelements in den vorderen Spreizdübel erfolgt und das Spreizelement eventuell abgelängt werden kann. Das Spreizelement kann mehr oder weniger weit durch den vorderen Spreizdübel durchgehen, so dass hier eine Anpassung an die Dicke der Fassade und ihren Abstand von der tragenden Wand erfolgt.

Eine Ausgestaltung der Erfindung sieht eine Einbringsperre für das stiftförmige Spreizelement im vorderen Spreizdübel vor. Eine Kraft, die notwendig ist, damit das Spreizelement die Einbringsperre überwindet, ist größer als die Kraft, die notwendig ist, um die beiden Spreizdübel an der Solltrennstelle voneinander zu trennen. Die Einbringsperre bewirkt, dass beim Einbringen des Spreizelements durch den hinteren Spreizdübel hindurch in den vorderen Spreizdübel der vordere Spreizdübel an der Solltrennstelle vom hinteren Spreizdübel getrennt wird, bevor das Spreizelement so tief in den vorderen Spreizdübel eindringt, dass es ihn (nennenswert) aufspreizt. Mit "nennenswert" ist insbesondere eine Aufspreizung gemeint, die ein Einbringen des vorderen Spreizdübels in das Sackloch in der tragenden Wand ver- oder jedenfalls stark behindert. Die Einbringsperre ist so tief im vorderen Spreizdübel vorgesehen, dass das Spreizelement so tief in den vorderen Spreizdübel eindringt, dass es ihn trägt, bevor es die Spreizdübel voneinander trennt, d.h. dass der vordere Spreizdübel nicht in einem Zwischenraum zwischen der Fassade und der tragenden Wand herunterfällt. Auch wenn der vordere Spreizdübel zuerst auf der tragenden Wand aufsitzt und das Sackloch "gesucht" werden muss, sollte der Halt des vorderen Spreizdübels auf dem Spreizelement so groß sein, dass der vordere Spreizdübel nicht vom Spreizelement herunterfällt. Die Einbringsperre wird beispielsweise durch einen entsprechend engen, auf das Spreizelement abgestimmten Innenquerschnitt des vorderen Spreizdübels bewirkt. Auch eine umlaufende Stufe oder eine Art "Lochblende" ist als Einbringsperre im vorderen Spreizdübel möglich.

Eine Ausgestaltung der Erfindung sieht einen Setztiefenanschlag des hinteren Spreizdübels vor, der seine Setztiefe im Durchgangsloch in der Fassade begrenzt. Der Setztiefenanschlag kann beispielsweise durch einen Radialflansch oder eine trichterförmige Öffnung am hinteren Ende des hinteren Spreizdübels gebildet sein, der/die an einer Mündung des Durchgangslochs in der Fassade an der der tragenden Wand abgewandten Seite der Fassade anliegt.

Das stiftförmige Spreizelement kann beispielsweise ein Nagel, ein profilierter Stab, eine Schraube oder eine Kombination dieser Elemente sein. Es weist beispielsweise eine Profilierung und/oder ein Schraubengewinde auf, die/das dem vorderen und/oder dem hinteren Spreizdübel zugeordnet ist. "Zugeordnet" bedeutet, dass sich die Profilierung bzw. das Schraubengewinde nach Abschluss der Abstandsmontage im entsprechenden Spreizdübel befindet und ihn aufspreizt. Die Profilierung kann umlaufend sein, beispielsweise eine Tannenbaumprofilierung oder umlaufende Rippen aufweisen. Auch ein Rändel ist als Profilierung möglich. Die Aufzählung ist nicht abschließend. Ist die Profilierung dem hinteren Spreizdübel zugeordnet, weist sie vorzugsweise einen größeren Durchmesser oder Querschnitt auf als das Spreizelement im übrigen Bereich vor der Profilierung, damit das Spreizelement durch den hinteren Spreizdübel hindurch in den vorderen Spreizdübel einbringbar ist und am Ende den hinteren Spreizdübel im Durchgangsloch in der Fassade aufspreizt. Der größere Durchmesser kann auch dadurch erreicht werden, dass das stiftförmige Spreizelement in diesem Bereich eine Hülse aufweist. So kann ein profilierter Stab beispielsweise in diesem Bereich mit Kunststoff umspritzt sein.

Die Erfindung wird nachfolgend anhand eines in der Zeichnung dargestellten Ausführungsbeispiels näher erläutert. Es zeigen:
- Figur 1: einen Doppel-Dübel gemäß der Erfindung im Achsschnitt; und
- Figuren 2 a-c: den Doppel-Dübel aus Figur 1 in drei aufeinander folgenden Montageschritten.

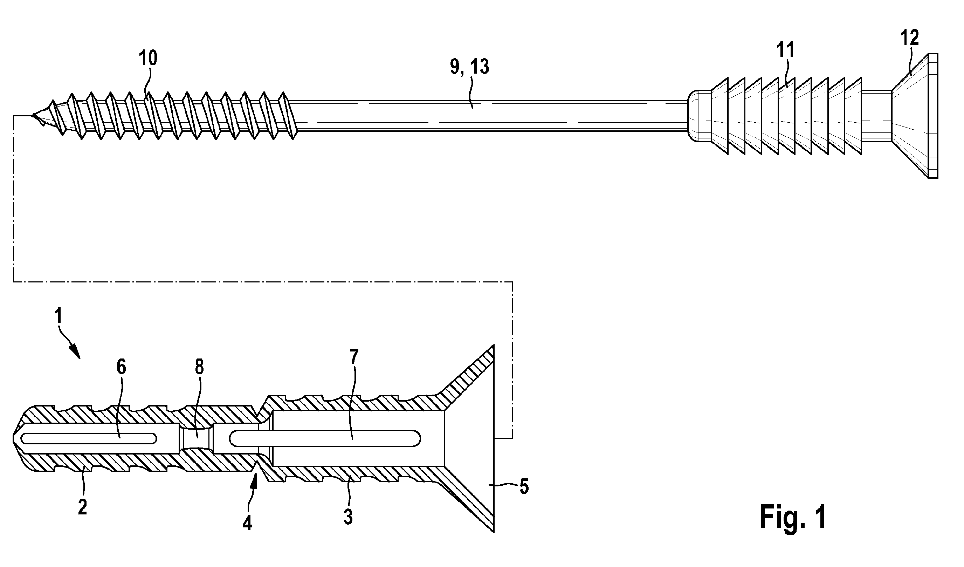

Der in Figur 1 dargestellte, erfindungsgemäße Doppel-Dübel 1 weist zwei axial hintereinander angeordnete Spreizdübel 2, 3 auf, die über eine Solltrennstelle 4 miteinander verbunden sind. Im Ausführungsbeispiel sind die beiden Spreizdübel 2, 3 in einem Stück durch Spritzgießen aus Kunststoff hergestellt. Der vordere Spreizdübel 2 weist einen kleineren Außen- und Innendurchmesser als der hintere Spreizdübel 3 auf. Die Solltrennstelle 4 ist im Ausführungsbeispiel eine umlaufende Nut mit V-förmigem Querschnitt. An einem hinteren, dem vorderen Spreizdübel 2 abgewandten Ende erweitert sich der hintere Spreizdübel 3 mit einer trichterförmigen Aufweitung 5. Die Spreizdübel 2, 3 können grundsätzlich wie bekannte und gebräuchliche Spreizdübel ausgebildet sein und sich durch Einbringen eines stiftförmigen Spreizelements, beispielsweise einer Schraube, einer Nagelschraube oder eines Nagels aufspreizen und dadurch in einem Loch in einem Untergrund verankern lassen. Im Ausführungsbeispiel sind die beiden Spreizdübel 2, 3 hülsenförmig und weisen Längsschlitze 6, 7 auf, um sie aufspreizen zu können. Nahe einem hinteren Ende, also nahe der Solltrennstelle 4, weist der vordere Spreizdübel 2 eine Einbringsperre 8 auf. Im Ausführungsbeispiel ist die Einbringsperre 8 eine örtliche Durchmesserverkleinerung. Die Einbringsperre 8 erhöht einen Einbringwiderstand eines Spreizelements so, dass die beiden Spreizdübel 2, 3 an der Solltrennstelle 4 voneinander getrennt werden, wenn das Spreizelement durch den hinteren Spreizdübel 3 in den vorderen Spreizdübel 2 eingebracht wird. Ein Widerstand, den die Einbringsperre 8 dem Spreizelement entgegensetzt, ist also größer als eine Kraft die erforderlich ist, um den Doppel-Dübel 1 an der Solltrennstelle 4 in die beiden Spreizdübel 2, 3 zu trennen.

Das stiftförmige, in Figur 1 oben gezeichnete Spreizelement 9 kann als Schraube aufgefasst werden. Es weist ein Holzschraubengewinde 10 an seinem vorderen Ende auf, das dem vorderen Spreizdübel 2 zugeordnet ist und das in etwa gleich lang wie der vordere Spreizdübel 2 ist. Am hinteren Ende weist das Spreizelement 9 eine Profilierung 11 auf, die dem hinteren Spreizdübel 3 zugeordnet ist. "Zugeordnet" bedeutet, dass nach Abschluss der Montage das Holzschraubengewinde 10 sich im vorderen Spreizdübel 2 befindet und diesen aufspreizt und die Profilierung 11 sich im hinteren Spreizdübel 3 befindet und diesen aufspreizt. Dahinter befindet sich ein Schraubenkopf 12. Die Profilierung 11 erstreckt sich über eine Länge, die ungefähr einer Länge des hinteren Spreizdübels 3 entspricht. Im Ausführungsbeispiel weist die Profilierung 11 eine umlaufende Tannenbaumprofilierung auf, was nicht zwingend für die Erfindung ist. Eine andere Möglichkeit für die Profilierung 11 ist ein Rändel (nicht dargestellt). Ein Durchmesser der Profilierung 11 ist größer als ein Durchmesser des Schraubengewindes 10. Im Ausführungsbeispiel ist die Profilierung 11 durch Umformen, beispielsweise durch Rollen oder Schmieden, hergestellt. Um den größeren Durchmesser zu erzielen, ist es auch möglich, eine Hülse mit oder evtl. auch ohne Profilierung auf dem Spreizelement 9 anzuordnen (nicht dargestellt). Zwischen dem Holzschraubengewinde 10 und der Profilierung 11 weist das Spreizelement 9 einen glattwandigen Schaft 13 auf.

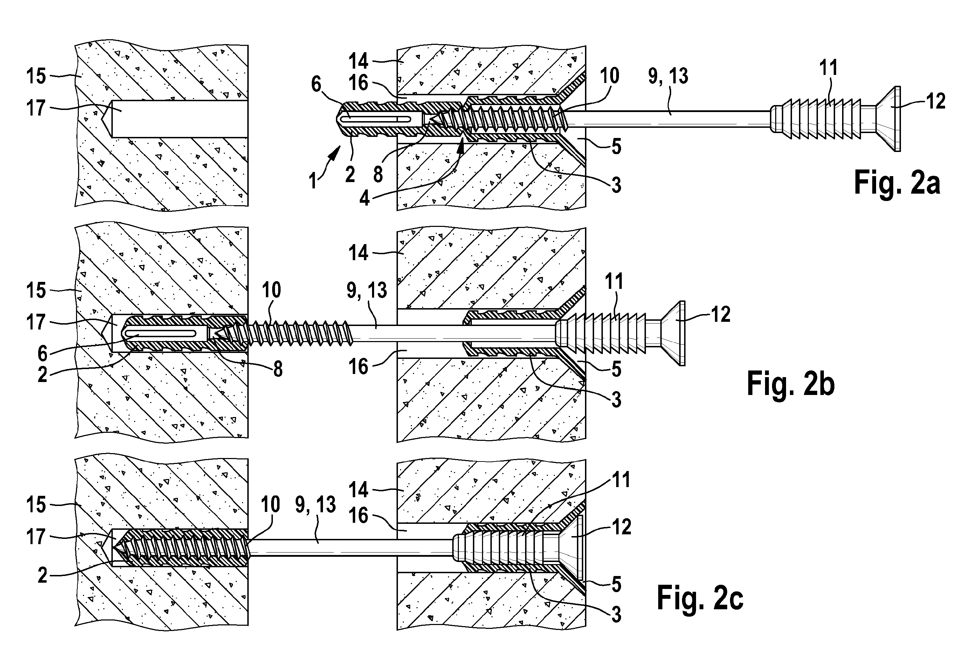

Zu einer Abstandsmontage einer Fassadenplatte 14 an bzw. vor einer tragenden Wand 15 wird ein Durchgangsloch 16 durch die Fassadenplatte 14 und durch das Durchgangsloch 16 ein Sackloch 17 in die tragende Wand 15 gebohrt (Figuren 2). In das Durchgangsloch 16 in der Fassadenplatte 14 wird der Doppel-Dübel 1 gesteckt, so dass seine trichterförmige Aufweitung 5 in einer Mündung des Durchgangslochs 16 auf einer der tragenden Wand 15 abgewandten Seite der Fassadenplatte 14 anliegt. Das stiftförmige Spreizelement 9 wird mit dem Holzschraubengewinde 10 voran durch den hinteren Spreizdübel 3 bis zur Einbringsperre 8 in den vorderen Spreizdübel 2 eingebracht (Figur 2a). Der Doppel-Dübel 1 kann auch vormontiert sein oder werden, d.h. er ist bereits bis zur Einbringsperre 8 auf dem Spreizelement 9 aufgenommen und wird so in das Durchgangsloch 16 in der Fassadenplatte 14 gesteckt.

Auf das bis zur Einbringsperre 8 in den Doppel-Dübel 1 eingebrachte Spreizelement 9 wird eine Axialkraft ausgeübt, beispielsweise durch Hammerschläge auf den Schraubenkopf 12. Dadurch reißt der Doppel-Dübel 1 an der Solltrennstelle 4, der vordere Spreizdübel 2 wird vom hinteren Spreizdübel 3 getrennt. Das Spreizelement 9 ist so weit in das hintere Ende des vorderen Spreizdübels 2 eingebracht, dass dieser zuverlässig auf dem vorderen Ende des Spreizelements 9 gehalten ist und nicht in einem Zwischenraum zwischen der Fassadenplatte 14 und der tragenden Wand 15 herunterfällt. Der Halt des vorderen Spreizdübels 2 auf dem Spreizelement 9 ist so gut, dass der vordere Spreizdübel 2 auch dann nicht vom Spreizelement 9 fällt, wenn das Sackloch 17 in der tragenden Wand 15 "gesucht" werden muss, bevor der vordere Spreizdübel 2 in das Sackloch 17 "trifft". Mit dem Spreizelement 9 wird der vordere Spreizdübel 2 in das Sackloch 17 in der tragenden Wand 15 eingebracht (Figur 2b).

Anschließend wird das Spreizelement 9 in den vorderen Spreizdübel 2 eingeschraubt und zieht die Profilierung 11 in den hinteren Spreizdübel 3 ein. Dabei spreizt das Holzschraubengewinde 10 den vorderen Spreizdübel 2 in der tragenden Wand 15 auf, so dass das Spreizelement 9 mittels des aufgespreizten vorderen Spreizdübels 2 in der tragenden Wand 15 verankert ist. Die Profilierung 11 des Spreizelements 9 spreizt den hinteren Spreizdübel 3 im Durchgangsloch 16 in der Fassadenplatte 14 auf, so dass das Spreizelement 9 mittels des aufgespreizten hinteren Spreizdübels 3 in der Fassadenplatte 14 verankert ist. Das Spreizelement 9 hält die Fassadenplatte 14 über die aufgespreizten und in der Fassadenplatte 14 bzw. der tragenden Wand 15 verankerten Spreizdübel 3, 2 in dem vorgegebenen Abstand von der tragenden Wand 15.

Das Spreizelement 9 wird so weit in den vorderen Spreizdübel 2 eingeschraubt, dass der Schraubenkopf 12 in der trichterförmigen Aufweitung 5 am hinteren Ende des hinteren Spreizdübels 3 einliegt. Die trichterförmige Aufweitung 5 bildet einen Setztiefenanschlag, der eine Setztiefe des Spreizdübels 3 durch Anlage an der Mündung des Durchgangslochs 16 in der Fassadenplatte 14 begrenzt und bestimmt.

### Bezugszeichenliste

### Doppel-Dübel und Verfahren für eine Abstandsmontage

- 1: Doppel-Dübel
- 2: vorderer Spreizdübel
- 3: hinterer Spreizdübel
- 4: Solltrennstelle
- 5: trichterförmige Aufweitung
- 6: Längsschlitz
- 7: Längsschlitz
- 8: Einbringsperre
- 9: Spreizelement
- 10: Holzschraubengewinde
- 11: Profilierung
- 12: Schraubenkopf
- 13: Schaft
- 14: Fassadenplatte
- 15: tragende Wand
- 16: Durchgangsloch
- 17: Sackloch

## Patentansprüche

1. Doppel-Dübel für eine Abstandsmontage, mit zwei hintereinander angeordneten Spreizdübeln (2, 3), die durch Einbringen eines stiftförmigen Spreizelements (9) aufspreizbar sind, **dadurch gekennzeichnet, dass** die beiden Spreizdübel (2, 3) über eine Solltrennstelle (4) miteinander verbunden sind, an der die beiden Spreizdübel (2, 3) beim Einbringen des Spreizelements (9) durch den hinteren Spreizdübel (3) hindurch in den vorderen Spreizdübel (2) voneinander getrennt werden.

2. Doppel-Dübel nach Anspruch 1, **dadurch gekennzeichnet, dass** der vordere Spreizdübel (2) eine Einbringsperre (8) aufweist, die dem Einbringen des Spreizelements (9) in den vorderen Spreizdübel (2) einen größeren Widerstand entgegensetzt als eine Kraft, die zum Trennen der beiden Spreizdübel (2, 3) voneinander an der Solltrennstelle (4) notwendig ist.

3. Doppel-Dübel nach Anspruch 1, **dadurch gekennzeichnet, dass** der hintere Spreizdübel (3) einen Setztiefenanschlag (5) aufweist.

4. Doppel-Dübel nach Anspruch 1, **dadurch gekennzeichnet, dass** das Spreizelement (9) ein Nagel ist.

5. Doppel-Dübel nach Anspruch 1, **dadurch gekennzeichnet, dass** das Spreizelement (9) mindestens eine Profilierung (11) aufweist, die einem der beiden Spreizdübel (3) zugeordnet ist.

6. Doppel-Dübel nach Anspruch 1, **dadurch gekennzeichnet, dass** das Spreizelement (9) mindestens ein Schraubengewinde (10) aufweist, das einem der beiden Spreizdübel (2) zugeordnet ist.

7. Doppel-Dübel nach Anspruch 1, **dadurch gekennzeichnet, dass** das Spreizelement (9) in einem dem hinteren Spreizdübel (3) zugeordneten Bereich einen größeren Querschnitt als vorne aufweist.

8. Verfahren für eine Abstandsmontage einer Fassade (14) auf einer tragenden Wand (15) mit einem Doppel-Dübel (1) nach einem der Ansprüche 1 bis 7, das mindestens folgende Verfahrensschritte umfasst:
- Durchstecken des Doppel-Dübels (1) durch ein Durchgangsloch (16) in der Fassade (14),
- Einbringen des stiftförmigen Spreizelements (9) in den hinteren Spreizdübel (3) und durch diesen hindurch in den vorderen Spreizdübel (2),
- Trennen des vorderen Spreizdübels (2) an der Solltrennstelle (4) vom hinteren Spreizdübel (3) mittels des stiftförmigen Spreizelements (9),
- Einbringen des vorderen Spreizdübels (2) in ein Sackloch (17) in der tragenden Wand (15) mittels des stiftförmigen Spreizelements (9), und
- Aufspreizen des vorderen Spreizdübels (2) in der tragenden Wand (15) und des hinteren Spreizdübels (3) in der Fassade (14) mittels des stiftförmigen Spreizelements (9),
- wobei das stiftförmige Spreizelement (9) über die beiden Spreizdübel (2, 3) die Fassade (14) mit der tragenden Wand (15) verbindet und in einem vorgegebenen Abstand hält.
